# EUROPEAN PATENT SPECIFICATION

(11) **EP 2 541 665 B1**
(45) Date of publication and mention of the grant of the patent: **25.11.2015**
(21) Application number: 10846128.6
(22) Date of filing: 22.02.2010
(51) Int. Cl.: H01M 12/08, H01M 10/052, H01M 10/0568, H01M 10/0569

(54) **NON-AQUEOUS LIQUID ELECTROLYTE SECONDARY BATTERY**
SEKUNDÄRBATTERIE MIT NICHT-WÄSSRIGEN FLÜSSIGEN ELEKTROLYTEN
BATTERIE SECONDAIRE À ÉLECTROLYTE LIQUIDE NON-AQUEUX

(43) Date of publication of application: 02.01.2013
(73) Proprietor: TOYOTA JIDOSHA KABUSHIKI KAISHA, Toyota-shi, Aichi-ken, 471-8571 (JP)
(72) Inventor: MIZUNO, Fuminori, Toyota-shi Aichi-ken, 471-8571 (JP); NAKAMOTO, Hirofumi, Toyota-shi Aichi-ken, 471-8571 (JP); HAMAMOTO, Kenichi, Toyota-shi Aichi-ken, 471-8571 (JP)
(74) Representative: TBK
(86) International application number: PCT/JP2010/052647
(87) International publication number: WO 2011/101992

(56) References cited:
- EP-A1- 0 886 334
- EP-A1- 1 369 951
- JP-A- 2002 298 914
- JP-A- 2003 100 309
- JP-A- 2004 119 278
- JP-A- 2005 142 047
- JP-A- 2008 084 689
- JP-A- 2009 289 450
- US-A1- 2003 077 517
- US-A1- 2008 254 363
- US-B1- 6 168 889

## Description

### Technical Field

The present invention relates to a non-aqueous liquid electrolyte secondary battery.

### Background Art

In recent years, with rapid widespread use of information-related devices and communication devices such as computers, video cameras and cellular phones, emphasis is placed on developing batteries used as the power source of the above devices. Also, in the automobile industry, development of batteries for electric vehicles and hybrid electric vehicles, having high output and capacity, is encouraged. Among various kinds of batteries, a lithium secondary battery receives attention since the energy density and output of the lithium secondary battery are high.

As a lithium secondary battery for electric vehicles and hybrid electric vehicles, which requires high energy density, a lithium-air battery particularly receives attention. The lithium-air battery uses oxygen in the air as a cathode active material. Thus, the capacity of the lithium-air battery can be larger than that of a conventional lithium secondary battery containing transition metal oxide such as lithium cobalt oxide as a cathode active material.

The reaction of the lithium-air battery varies by the liquid electrolyte, etc. being used. However, the following reaction of the lithium-air battery using lithium metal as an anode active material is known.

[Discharging]
   Anode: Li→Li⁺+e⁻
   Cathode: 2Li⁺+O2+2e⁻→Li₂O₂ or 4Li⁺+O₂+4e⁻→2Li₂O
[Charging]
   Anode: Li⁺+e⁻→Li
   Cathode: Li₂O₂→2Li⁺+O₂+2e⁻ or 2Li₂O→4Li⁺+O2+4e⁻

Lithium ions (Li⁺) in the reaction at the cathode upon discharging are dissolved from the anode by electrochemical oxidation and transferred from the anode to the cathode through a non-aqueous liquid electrolyte. Oxygen (O₂) is supplied to the cathode.

Examples of the conventional lithium-air battery include ones described in Patent Literatures 1 and 2.

For example, Patent Literature 1 discloses a non-aqueous electrolyte battery comprising an anode capable of releasing metal ions, a cathode comprising a carbon material, a non-aqueous liquid electrolyte present between the anode and the cathode, which contains an organic carbonate compound having a (-O-(C=O)-O-) structure, and a battery case provided with an air hole for supplying oxygen to the cathode, wherein the carbon material surface of the cathode is covered with a film of decomposition products of the organic carbonate compound.

The purpose of the non-aqueous electrolyte battery disclosed in Patent Literature 1 is to prevent the volatilization of an organic liquid electrolyte from the air hole, thereby improving a battery lifetime and discharged capacity.

Patent Literature 2 discloses a non-aqueous electrolyte air battery comprising a cathode, an anode storing and releasing lithium ions, a non-aqueous electrolyte-containing layer present between the cathode and the anode, and a case housing at least the cathode, the anode and the non-aqueous electrolyte-containing layer and being provided with an air hole for supplying oxygen to the cathode, wherein a non-aqueous liquid electrolyte of the non-aqueous electrolyte-containing layer is made of an ambient temperature molten salt comprising at least one kind of cation represented by the specific chemical formula and a lithium ion.
US6168889 (B1) relates to battery electrolytes and batteries. The battery electrolyte includes the lithium salts, LiN(CF₃SO₂)₂, and LiCF₃SO₃ in a solvent blend comprising ethylene carbonate, propylene carbonate, and 1,2-dimethoxyethane. In one aspect, the battery includes a first electrode, a second electrode, and an electrolyte between the first and second electrodes. The electrolyte comprises these lithium salts in a solvent blend comprising ethylene carbonate, propylene carbonate, and 1,2-dimethoxyethane. In another aspect, the battery includes a cathode comprising at least one of MnO₂ and (CF)x, and an anode comprising lithium. The battery further includes a non-aqueous electrolyte between the cathode and the anode. The non-aqueous electrolyte comprises the lithium salts in a solvent blend comprising ethylene carbonate, propylene carbonate, and 1,2-dimethoxyethane. The lithium salts comprise a mixture of LiN(CF₃SO₂)₂, and LiCF₃SO₃. US2008254363 (A1) relates to an electrochemical energy storage device comprising a positive electrode, a negative electrode, and a non-aqueous electrolytic solution containing an ammonium salt, wherein the negative electrode potential upon completion of charging is set to less than 1.8 V and 0.1 V or more relative to a lithium reference. A non-aqueous liquid electrolyte secondary battery (electrochemical energy storage device) comprises an ammonium salt-containing, non-aqueous liquid electrolyte in which *inter alia* bistrifluoromethanesulfonylimide (TFSI), hexafluorophosphate (PF₆-) and tetrafluoroborate (BF₄-) may be contained as anions.
EP1369951 (A1) relates to a battery comprising a spirally wound electrode body including a strip-shaped cathode and a strip-shaped anode spirally wound with a separator in between. The separator is impregnated with an electrolyte solution including an electrolyte salt. The electrolyte salt includes a first lithium salt LiN(CₙF₂ₙ₊₁SO₂) (CₘF₂ₘ₊₁SO₂) and a second lithium salt such as LiPF₆ or the like.
US2003077517 (A1) relates to lithium batteries using LiCoO₂ mixed with CaO or Cr₂O₃ or the like as an active material of positive electrode in combination with a non-aqueous electrolyte containing a mixed electrolyte salt comprising both a fluorine-containing inorganic anion lithium salt and a lithium imide salt. JP2002298914 (A) relates to to a nonaqueous electrolyte secondary battery which is provided with a positive electrode, a negative electrode, and a nonaqueous electrolyte containing lithium salt. The lithium salt comprises first salt S1 of composition expressed by LiN(CnF2n+1So2)2 (n is 1-4), and second salt S2 comprising at least one of LiBF4 and LiPF6, and the mol ratio S1 :S2 of the first salt S1 and second salt S2 is in a range of 45:55-1:99.
EP0886334 (A1) relates to a lithium secondary battery comprising a nonaqueous electrolyte obtained by dissolving an electrolytic salt in a solvent, a negative electrode comprising a negative electrode material and a positive electrode comprising a positive electrode active material, the electrolytic salt comprising: at least one electrolytic salt A selected from the group consisting of LiPF₆, LiAsF₆, LiSbF₆, LiBF₄, LiBiF₄, LiAlF₄, LiGaF₄, LiInF₄ and LiClO₄, and at least one electrolytic salt B selected from the group consisting of LiN(CₙF2ₙ₊₁SO₂)₂ wherein n is an integer of 1, 2, 3 or 4 and LiC(CₘF₂ₘ₊₁SO₂)₃ wherein m is an integer of 1, 2, 3 or 4.
JP2009289450 (A) relates to an air cell including an electrolyte in charge of conduction of lithium ions between an air electrode layer and an negative electrode layer, wherein the electrolyte contains LiClO₄, a lithium cation, and a fluorine-containing anion salt having a fluorine-containing anion, as a supporting salt.

### Citation List

### [Patent Literature]

Patent Literature 1: Japanese Patent Application Laid-Open (JP-A) No. 2003-100309
Patent Literature 2: JP-A No. 2004-119278

### Summary of Invention

### Technical Problem

By the research of the inventors of the present invention, the following has been found: the decomposition products of the organic carbonate compound disclosed in Patent Literature 1 are produced by a reaction of the organic carbonate compound with oxygen radical (O₂⁻) formed by oxygen (O₂) reduction on a carbon and a catalyst of the cathode. Further, the following has newly been found: in the techniques of Patent Literature 1, battery resistance after discharge is significantly increased and full charge of a battery is difficult. In consideration of the above disadvantages, it is considered that Patent Literature 1 has few advantages that can be obtained from positive formation of the film.

In a production process of a secondary battery using a non-aqueous liquid electrolyte containing an organic solvent, oxygen (O₂) is highly likely to be mixed into the organic solvent. Oxygen (O₂) mixed into the organic solvent in the production process is reduced at a cathode to form oxygen radical (O₂⁻), and is a cause of a side reaction caused by oxygen radical (O₂⁻). In an air battery using oxygen as a cathode active material, the amount of oxygen much larger than that of oxygen mixed is dissolved in the liquid electrolyte. Thus, large amount of oxygen radical (O₂⁻) can be formed.

As the side reaction caused by oxygen radical (O₂⁻), there may be mentioned a decomposition reaction of other materials constituting a battery, etc. in addition to a decomposition reaction of a solvent such as the above-mentioned organic carbonate compound or the like. In the secondary battery which is used for a long time while charge and discharge are repeated, the above-mentioned side reaction caused by oxygen radical is one of major cause of decreasing battery durability.

However, by the research of the inventors of the present invention, it has been found that the reaction in which oxygen (O₂) is reduced to form oxygen radical (O₂⁻) is caused in a potential range of 2 to 3 V (relative to a Li/Li+ reference electrode). On the other hand, the lithium secondary battery generally employed is designed to have a discharge potential of more than 3V, so that the oxygen radical (O₂⁻) formation from oxygen (O₂) mixed in the production process is not a big problem; however, it will certainly be a big problem as employing a battery having a discharge potential of 3V or less, with future diversification of batteries. Thereby, to prevent such a side reaction, a conditioning process for removing dissolved oxygen is required to be installed before shipment of a secondary battery.

In the air batteries as disclosed in Patent Literatures 1 and 2 in which oxygen being a cathode active material is supplied to a cathode from the air (external air), water and carbon dioxide in the air can be supplied together with oxygen. In such open-air batteries, oxygen radical (O₂⁻) formed from oxygen being a cathode active material causes a chain reaction with water and carbon dioxide in addition to an organic solvent such as an organic carbonate compound, so that a chain radical reaction is caused in addition to the decomposition reaction of the organic solvent. To the contrary, in closed air batteries in which oxygen is supplied by flowing oxygen gas to a cathode, water and carbon dioxide are prevented from entering the battery. Thereby, such closed air batteries easily cause a characteristic (specific) reaction in which an organic solvent is decomposed by oxygen radical (O₂⁻) formed from oxygen being a cathode active material.

The present invention was made in view of the above circumstances, and it is an object of the present invention to provide a non-aqueous liquid electrolyte secondary battery having excellent durability and capacity by improving oxygen radical resistance of a non-aqueous liquid electrolyte.

### Solution to Problem

The non-aqueous liquid electrolyte secondary battery of the present invention is a non-aqueous liquid electrolyte secondary battery comprising a cathode, an anode and a non-aqueous liquid electrolyte present between the cathode and the anode,
wherein the non-aqueous liquid electrolyte secondary battery has a closed structure in which the cathode, the anode and the non-aqueous liquid electrolyte are insulated from at least carbon dioxide and water; wherein the cathode uses oxygen as an active material;
wherein the non-aqueous liquid electrolyte secondary battery has a discharge voltage of 3V or less relative to a Li/Li+ reference electrode; and
wherein the non-aqueous liquid electrolyte comprises bistrifluoromethanesulfonylimide as a first anion having a relatively large molecular weight, and at least one kind selected from the group consisting of trifluoromethanesulfonate, hexafluorophosphate and tetrafluoroborate as a second anion having a relatively small molecular weight.

According to the present invention, in the non-aqueous liquid electrolyte, a potential at which oxygen radical (O₂⁻) is formed from oxygen (O₂) (hereinafter referred to as potential of oxygen radical formation) can be decreased. In particular, the battery of the present invention has a large potential window of the non-aqueous liquid electrolyte, in which oxygen radical (O₂⁻) is not formed, in a potential range of 3V or less relative to a Li/Li+ reference electrode (hereinafter referred to as "vs. Li/Li+"), so that there can be improved oxygen radical resistance of the liquid electrolyte in the non-aqueous liquid electrolyte secondary battery having a discharge potential of 3V or less (vs. Li/Li+). Thereby, a side reaction involving oxygen radical (O₂⁻) (for example, a decomposition reaction of a solvent in a non-aqueous liquid electrolyte, etc.) can be prevented. Further, there can be prevented an increase in battery resistance and a decrease in charge performance, which are attributable to the decomposition products produced by the side reaction. Therefore, according to the present invention, it is possible to improve battery performance such as durability and capacity.

A specific example of the non-aqueous liquid electrolyte secondary battery includes a non-aqueous liquid electrolyte lithium secondary battery. In the case that the non-aqueous liquid electrolyte secondary battery is a lithium-air battery in which the cathode uses oxygen as an active material, the advantage that can be obtained by the present invention is particularly high. This is because a metal-air battery typified by the lithium-air battery has a high dissolved oxygen concentration in a non-aqueous liquid electrolyte, so that a problem caused by oxygen radical (O₂⁻) is particularly likely to occur.

The specific combination of anions contained in the non-aqueous liquid electrolyte is a combination of at least the first anion having a relatively large molecular weight and the second anion having a relatively small molecular weight.

It is preferable that a molar ratio of the first anion to the second anion (first anion: second anion) is 95:5 to 65:35.

The combination of the first anion and the second anion includes a combination of the first anion comprising at least bistrifluoromethanesulfonylimide and the second anion comprising at least trifluoromethanesulfonate.

The non-aqueous liquid electrolyte is preferably a solution in which an electrolyte salt is dissolved in at least one kind of non-aqueous solvent selected from the group consisting of acetonitrile, dimethyl sulfoxide, dimethoxyethane, N-methyl-N-propylpiperidinium bis(trifluoromethanesulfonyl)imide and N-methyl-N-propylpyrrolidinium bis(trifluoromethanesulfonyl)imide, since the decomposition of the non-aqueous liquid electrolyte caused by oxygen radical (O₂⁻) can be more efficiently prevented.

In the non-aqueous liquid electrolyte secondary battery of the present invention, as the closed structure in which the cathode, the anode and the non-aqueous liquid electrolyte are insulated from at least carbon dioxide and water, there may be mentioned a closed structure in which the cathode, the anode and the non-aqueous liquid electrolyte are insulated from the atmosphere.

The non-aqueous liquid electrolyte of the present invention is a non-aqueous liquid electrolyte for a non-aqueous liquid electrolyte secondary battery, comprising a cathode, an anode and a non-aqueous liquid electrolyte present between the cathode and the anode,
wherein the non-aqueous liquid electrolyte comprises bistrifluoromethanesulfonylimide as a first anion having a relatively large molecular weight, and at least one kind selected from the group consisting of trifluoromethanesulfonate, hexafluorophosphate and tetrafluoroborate as a second anion having a relatively small molecular weight;
wherein the non-aqueous liquid electrolyte secondary battery has a closed structure in which the cathode, the anode and the non-aqueous liquid electrolyte are insulated from at least carbon dioxide and water; wherein the cathode uses oxygen as an active material; and
wherein the non-aqueous liquid electrolyte secondary battery has a discharge voltage of 3V or less relative to a Li/Li+ reference electrode.

A specific example of the non-aqueous liquid electrolyte secondary battery includes a non-aqueous liquid electrolyte lithium secondary battery. A more specific example of the non-aqueous liquid electrolyte secondary battery includes a lithium-air battery in which the cathode uses oxygen as an active material.

The specific combination of anions contained in the non-aqueous liquid electrolyte is a combination of at least the first anion having a relatively large molecular weight and the second anion having a relatively small molecular weight.

It is preferable that a molar ratio of the first anion to the second anion (first anion: second anion) is 95:5 to 65:35.

The combination of the first anion and the second anion includes a combination of the first anion comprising at least bistrifluoromethanesulfonylimide and the second anion comprising at least trifluoromethanesulfonate.

The non-aqueous liquid electrolyte is preferably a solution in which an electrolyte salt is dissolved in at least one kind of non-aqueous solvent selected from the group consisting of acetonitrile, dimethyl sulfoxide, dimethoxyethane, N-methyl-N-propylpiperidinium bis(trifluoromethanesulfonyl)imide and N-methyl-N-propylpyrrolidinium bis(trifluoromethanesulfonyl)imide, since a metal-air battery typified by the lithium-air battery has a high dissolved oxygen concentration in a non-aqueous liquid electrolyte, so that a problem caused by oxygen radical (O₂⁻) is particularly likely to occur.

In the non-aqueous liquid electrolyte secondary battery of the present invention, an example of the closed structure in which the cathode, the anode and the non-aqueous liquid electrolyte are insulated from at least carbon dioxide and water includes a closed structure in which the cathode, the anode and the non-aqueous liquid electrolyte are insulated from the atmosphere.

### Advantageous Effects of Invention

According to the present invention, it is possible to improve oxygen radical (O₂⁻) resistance of the liquid electrolyte. Therefore, according to the present invention, it is possible to improve durability and capacity of the non-aqueous liquid electrolyte secondary battery.

### Brief Description of Drawings

FIG. 1 is a sectional view showing an embodiment of a non-aqueous liquid electrolyte secondary battery of the present invention.
FIG. 2 is a graph showing CV measurement results of Examples and Comparative Examples.

### Description of Embodiments

The non-aqueous liquid electrolyte secondary battery of the present invention is a non-aqueous liquid electrolyte secondary battery comprising a cathode, an anode and a non-aqueous liquid electrolyte present between the cathode and the anode,
wherein the non-aqueous liquid electrolyte secondary battery has a closed structure in which the cathode, the anode and the non-aqueous liquid electrolyte are insulated from at least carbon dioxide and water; wherein the cathode uses oxygen as active material;
wherein the non-aqueous liquid electrolyte secondary battery has a discharge voltage of 3V or less relative to a Li/Li+ reference electrode; and
wherein the non-aqueous liquid electrolyte comprises bistrifluoromethanesulfonylimide as a first anion having a relatively large molecular weight, and at least one kind selected from the group consisting of trifluoromethanesulfonate, hexafluorophosphate and tetrafluoroborate as a second anion having a relatively small molecular weight.

Hereinafter, there will be described the non-aqueous liquid electrolyte secondary battery (hereinafter, it may be simply referred to as secondary battery) of the present invention, and the non-aqueous liquid electrolyte for the non-aqueous liquid electrolyte secondary battery of the present invention.

The secondary battery of the present invention comprises a non-aqueous liquid electrolyte present between the cathode and the anode as an electrolyte which conducts ions between the cathode and the anode.

The secondary battery of the present invention has a discharge voltage of 3V or less (vs. Li/Li+). As described above, the reaction in which oxygen radical (O₂⁻) is formed from oxygen (O₂) is caused in the potential range of 2 to 3 V (vs. Li/Li+). Therefore, in the battery of the present invention, if oxygen is present in the battery, the reaction in which oxygen radical (O₂⁻) is formed from oxygen (O₂) upon discharging is likely to be caused.

Further, the secondary battery of the present invention has a closed structure in which the cathode, the anode and the non-aqueous liquid electrolyte interposed between the cathode and the anode are insulated from at least carbon dioxide and water. As described above, oxygen radical (O₂⁻) easily causes a chain reaction not only with oxygen but also with carbon dioxide and water. Therefore, the battery of the present invention is more likely to cause a reaction in which oxygen (O₂) is reduced to form oxygen radical (O₂⁻), compared to the battery in which carbon dioxide and water are present together with oxygen.

As a result of diligent researches for improving oxygen radical resistance of the non-aqueous liquid electrolyte in the secondary battery, which has the conditions that facilitate oxygen radical (O₂⁻) formation reaction from oxygen (O₂), the inventors of the present invention has found out that the potential at which oxygen radical (O₂⁻) is formed from oxygen (O₂) (hereinafter referred to as peak potential of oxygen reduction), can be decreased by adding two or more kinds of anions to the non-aqueous liquid electrolyte.

A decrease in the peak potential of oxygen reduction means that a potential window which is stable toward oxygen radical (O₂⁻) of the non-aqueous liquid electrolyte widens. That is, according to the present invention, it is possible to prevent the side reaction caused by oxygen radical (O₂⁻), such as a decomposition of an organic solvent in the non-aqueous liquid electrolyte by oxygen radical (O₂⁻). Therefore, according to the present invention, it is possible to selectively progress a desired electrode reaction, thereby improving battery performance such as capacity and durability.

It has not clearly been understood that the mechanism in which peak potential of oxygen (dissolved oxygen) reduction is decreased by adding two or more kinds of anions to the non-aqueous liquid electrolyte; however, the mechanism is presumed as below. In particular, different kinds of anions are generally different in size (molecular weight). In the non-aqueous liquid electrolyte comprising two or more kinds of anions as described above, it is presumed that interactions differ in strength are caused between oxygen (O₂) and the anions differ in size. To the contrary, in the non-aqueous liquid electrolyte comprising one kind of anion, it is presumed that a single interaction is caused between oxygen (O₂) and the anion. As described above, the interactions differ in strength are caused at oxygen (O₂), thereby decreasing the reactivity of oxygen (O₂) compared with the case that the single interaction is caused in oxygen (O₂).

Further, in the non-aqueous liquid electrolyte comprising two or more kinds of anions, it is presumed that a repulsive force differ in strength is also caused between the generated oxygen radical (O₂⁻) and two or more kinds of anions. It is considered that such a repulsive force between oxygen radical (O₂⁻) and two or more kinds of anions may have some effect on a decrease in potential of oxygen radical formation.

In the present invention, the closed structure in which the cathode, the anode and the non-aqueous liquid electrolyte are insulated from at least carbon dioxide and water is not particularly limited as long as it has a structure in which carbon dioxide and water are prevented from entering the battery from outside of the battery, so that the cathode, the anode and the non-aqueous liquid electrolyte are prevented from being in contact with the carbon dioxide and water. For example, there may be mentioned a sealed structure having no structure capable of communicating with the outside, and a closed structure capable of communicating with a supply source and an outlet of an active material to the electrode, while not capable of communicating with the outside other than the supply source and the outlet, in which carbon dioxide and water are prevented from entering the battery from the supply source and outlet. In the case of the air battery using oxygen in the air (external air) as a cathode active material, there may be mentioned a structure in which oxygen in the external air can be supplied into the battery by communicating with the outside; however, carbon dioxide and water in the external air can be selectively prevented from entering the battery.

As a method for selectively preventing carbon dioxide and water from entering the battery, for example, there may be mentioned a method for disposing a material having a carbon dioxide absorption property and a material having a moisture absorption property in an inlet capable of communicating with the outside. Examples of the material having a moisture absorption property include materials generally used as a desiccating agent including deliquescent materials such as calcium chloride, potassium peroxide and potassium carbonate and materials having a moisture-adsorptive property such as a silica gel. Examples of the material having carbon dioxide absorption property include lithium silicate, zinc oxide, zeolite, an activated carbon and alumina.

In the present invention, the non-aqueous liquid electrolyte comprises at least a non-aqueous solvent containing an organic solvent and/or an ionic liquid and an electrolyte salt and comprises bistrifluoromethanesulfonylimide as a first anion having a relatively large molecular weight, and at least one kind selected from the group consisting of trifluoromethanesulfonate, hexafluorophosphate and tetrafluoroborate as a second anion having a relatively small molecular weight; however, the source (derivation) of the anions is not particularly limited. Examples of the source of the anions include an electrolyte salt and an ionic liquid. Examples of the specific composition of the non-aqueous liquid electrolyte of the present invention include: (1) a composition in which at least two kinds of electrolyte salts each containing a different anion are dissolved in an organic solvent; (2) a composition in which at least one kind of electrolyte salt containing two or more kinds of anions is dissolved in an organic solvent; (3) a composition in which an electrolyte salt containing at least anion different from the ionic liquid is dissolved in one kind of ionic liquid; and (4) a composition in which one or more kinds of electrolyte salts are dissolved in two or more kinds of ionic liquids.

The organic solvent is not particularly limited as long as it can dissolve an electrolyte salt being used, and the example includes one which can be used for the liquid electrolyte for the lithium secondary battery. Specific examples of the organic solvent include propylene carbonate, ethylene carbonate, vinylene carbonate, dimethyl carbonate, ethyl methyl carbonate, diethyl carbonate, methyl propyl carbonate, isopropyl methyl carbonate, ethyl propionate, methyl propionate, γ-butyrolactone, ethyl acetate, methyl acetate, tetrahydrofuran, 2-methyltetrahydrofuran, ethyleneglycol dimethylether, ethyleneglycol diethylether, acetonitrile, dimethylsulfoxide, diethoxyethane and dimethoxyethane.

The ionic liquid is also not particularly limited as long as it can dissolve an electrolyte salt being used, and the example includes one which can be used for the liquid electrolyte for the lithium secondary battery. Specific examples of the ionic liquid include aliphatic quaternary ammonium salts such as N,N,N-trimethyl-N-propylammonium bis(trifluoromethanesulfonyl)imide (TMPA-TFSI), N-methyl-N-propylpiperidinium bis(trifluoromethanesulfonyl)imide (PP13-TFSI), N-methyl-N-propylpyrrolidinium bis(trifluoromethanesulfonyl)imide (P13-TFSI) and N-methyl-N-butylpyrrolidinium bis(trifluoromethanesulfonyl)imide (P14-TFSI); and alkyl imidazolium quanternary salts such as 1-methyl-3-ethylimidazolium tetrafluoroborate (EMIBF₄), 1-methyl-3-ethylimidazolium bis(trifluoromethanesulfonyl)imide (EMITFSI), 1-allyl-3-ethylimidazolium bromide (AEImBr), 1-allyl-3-ethylimidazolium tetrafluoroborate (AEImBF₄), 1-allyl-3-ethylimidazolium bis(trifluoromethanesulfonyl)imide (AEImTFSI), 1,3-diallylimidazolium bromide (AAImBr), 1,3-diallylimidazolium tetrafluoroborate (AAImBF₄) and 1,3-diallylimidazolium bis(trifluoromethanesulfonyl)imide (AAImTFSI).

Among the above-mentioned organic solvents and ionic liquids, preferred is at least one kind selected from the organic solvents such as acetonitrile, dimethyl sulfoxide and dimethoxyethane, and the ionic liquids such as N-methyl-N-propylpiperidinium bis(trifluoromethanesulfonyl)imide and N-methyl-N-propylpyrrolidinium bis(trifluoromethanesulfonyl)imide, since it is less likely to react with oxygen radical (O₂⁻). In addition, the ionic liquid is preferable since it can be the source of anion in the non-aqueous liquid electrolyte. The organic solvent and the ionic liquid being the non-aqueous solvent can be used alone or in combination of two or more kinds.

The electrolyte salt is not particularly limited as long as it can conduct ions required to be conducted between the cathode and the anode, and can be appropriately selected according to the embodiment of the secondary battery.

The concentration of the electrolyte salt in the non-aqueous liquid electrolyte varies depending on the type of electrolyte salt being used, and it is generally preferably in the range of 0.1 to 3.0 mol/L, more preferably in the range of 0.5 to 1.5 mol/L.

The examples of anions contained in the electrolyte salt include a perchlorate ion (ClO₄⁻) (molecular weight: about 100), a hexafluorophosphate ion (PF₆⁻) (molecular weight: about 145), a tetrafluoroborate ion (BF₄⁻) (molecular weight: about 87) and anions represented by the following formulae (1) and (2).

Formula (1): (SO₃CₘF₂ₘ₊₁)⁻

wherein "m" is 1 or more and 8 or less and preferably 1 or more and 4 or less.

Specific examples of the anion represented by Formula (1) include trifluoromethanesulfonate (TfO; molecular weight: about 149), etc.

Formula (2): [N(CₙF₂ₙ₊₁SO₂) (CₚF₂ₚ₊₁SO₂)]⁻

wherein each of "n" and "p" is 1 or more and 8 or less, preferably 1 or more and 4 or less and may be the same or different from each other.

Specific examples of the anion represented by Formula (2) include bistrifluoromethanesulfonylimide ([N(CF₃SO₂)₂)]⁻) (TFSI; molecular weight: about 280), bispentafluoroethanesulfonyl imide ([N(C₂F₅S0₂)₂)]⁻), trifluoromethanesulfonyl nonafluorobutanesulfonyl imide ([N(CF₃SO₂) (C₄F₉SO₂))]⁻), etc.

In the present invention, a specific combination of two or more kinds of anions contained in the non-aqueous liquid electrolyte is defined by claim 1. The combination includes a combination of two or more kinds of anions different in molecular weight. In particular, it is the combination of at least the first anion having a relatively large molecular weight (hereinafter simply referred to as the first anion) and the second anion having a relatively small molecular weight (hereinafter simply referred to as the second anion). It is estimated that the effect of preventing an oxygen reduction reaction caused by the above-mentioned interaction can be obtained by using anions different in molecular weight (that is, molecular size) in combination.

The anions different in molecular weight used for combination are not particularly limited to two kinds of anions including the first anion and the second anion. Three or more kinds of anions different in molecular weight can be used.

In the present invention, the specific combination of the first anion and the second anion, the molecular weight range, the molecular weight difference, etc. are limited, since the effect of decreasing the potential of oxygen reduction (= potential of oxygen radical formation) is particularly high, if it is used: (1) a combination of at least bistrifluoromethanesulfonylimide (TFSI) as the first anion and at least trifluoromethane sulfonate (TfO) as the second anion; (2) a combination of at least TFSI as the first anion and at least hexafluorophosphate ion (PF₆⁻) as the second anion; (3) a combination of at least TFSI as the first anion and tetrafluoroborate ion (BF₄⁻) as the second anion. Among them, preferred is the combination (1).

The ratio of the anions contained in the non-aqueous liquid electrolyte is not particularly limited, and can be appropriately set. For example, the molar ratio (first anion: second anion) of the first anion and the second anion is preferably in the range of 95:5 to 65:35, more preferably in the range of 92:8 to 65:35, still more preferably in the range of 92:8 to 88:12, further more preferably 90:10.

Cations being counterions of the anions are not particularly limited. For example, they may be appropriately selected according to the conducting ion species required for the non-aqueous liquid electrolyte.

Hereinafter, the present invention including constitutional components other than the non-aqueous liquid electrolyte will be described further in detail. The present invention can be applied to, for example, general secondary batteries using a non-aqueous liquid electrolyte, such as lithium secondary batteries, sulfur batteries, metal-air batteries (for example, a sodium-air battery, a magnesium-air battery, a calcium-air battery and a potassium-air battery). The present invention is preferably applied to the lithium secondary batteries among the above-mentioned secondary batteries since the lithium secondary batteries have high energy density and output. Among the lithium secondary batteries, especially in a lithium-air battery, oxygen is dissolved in the non-aqueous liquid electrolyte upon discharging. Therefore, the lithium-air battery is a secondary battery which can obtain particularly-high effect by the present invention.

Herein, the lithium secondary battery refers to a secondary battery which is operated by having lithium ions transferred from an anode to a cathode upon discharging and having lithium ions transferred from a cathode to an anode upon charging. Examples of the lithium secondary battery include one using an anode comprising lithium metal and one using an anode comprising a material capable of intercalating and deintercalating lithium ions such as graphite. Further, the lithium secondary battery includes the lithium-air battery.

In the present invention, specific structure of each of the secondary batteries, including a cathode, an anode, cathode and anode current collectors, a separator and a battery case, is not particularly limited, and a general structure can be employed.

Herein, the secondary battery of the present invention will be described in detail using a lithium-air battery as an example. In the present invention, the lithium-air battery is not limited to the following structure.

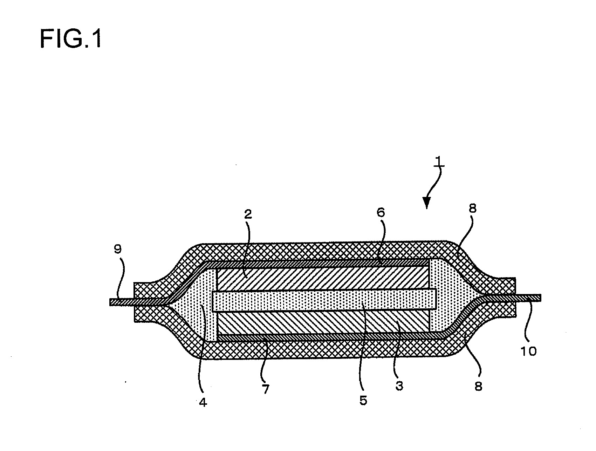

FIG. 1 is a sectional view showing an embodiment of the non-aqueous liquid electrolyte secondary battery (lithium-air battery) of the present invention. Secondary battery (lithium-air battery) 1 is constituted with cathode (air cathode) 2 using oxygen as an active material, anode 3 comprising an anode active material, non-aqueous liquid electrolyte 4 conducting lithium ions between cathode 2 and anode 3, separator 5 interposing between cathode 2 and anode 3 and ensuring electrical insulation between cathode 2 and anode 3, cathode current collector 6 collecting current of cathode 2, and anode current collector 7 collecting current of anode 3, and these are housed in battery case 8.

Separator 5 has a porous structure, and non-aqueous liquid electrolyte 4 is impregnated with the inside of the porous structure. Non-aqueous liquid electrolyte 4 is impregnated with the inside of cathode 2, and as needed, the inside of anode 3.

Cathode 2 is electrically connected to cathode current collector 6 collecting current of cathode 2. Cathode current collector 6 has a porous structure capable of supplying oxygen to cathode 2. Anode 3 is electrically connected to anode current collector 7 collecting current of anode 3. One end of cathode current collector 6 projects from battery case 8 and functions as cathode terminal 9. One end of anode current collector 7 projects from battery case 8 and functions as anode terminal 10.

Not shown in FIG. 1, secondary battery 1 has a structure in which water and carbon dioxide are prevented from entering the inside of battery case 8 from the outside.

The cathode (air cathode) generally has a porous structure containing an electroconductive material. The cathode comprises a binder, and a catalyst which facilitates a cathode reaction, if necessary.

The electroconductive material is not particularly limited as long as it has electrical conductivity, and the examples include a carbon material, etc. Specific examples of the carbon material include mesoporous carbon, graphite, acetylene black, carbon nanotube and carbon fiber. The content of the electroconductive material in the cathode is preferably, for example, in the range of 10% by weight to 99% by weight, with respect to the total amount of constitutional materials of the cathode.

The cathode preferably comprises a binder since the catalyst and the electroconductive material can be fixed by adding a binder to the cathode, so that a cathode having excellent cyclability can be obtained. Examples of the binder include polyvinylidene difluoride (PVdF), polytetrafluoroethylene (PTFE), polyethylene, polypropylene and styrene-butadiene rubber. The content of the binder in the cathode is preferably, for example, 40% by weight or less, more preferably in the range of 1% by weight to 10% by weight, with respect to the total amount of constitutional materials of the cathode.

Since the reaction rate of the electrochemical reaction of oxygen is slow, the overpotential is large, so that the voltage of a battery decreases. Thus, to increase the reaction rate of the electrochemical reaction of oxygen, the cathode preferably comprises a catalyst.

Examples of the catalyst include ones usable for a cathode (air cathode) of a lithium-air battery. The examples include: phthalocyanine compounds such as cobalt phthalocyanine, manganese phthalocyanine, nickel phthalocyanine, tin phthalocyanine oxide, titanyl phthalocyanine and dilithium phthalocyanine; naphthocyanine compounds such as cobalt naphthocyanine; porphyrin compounds such as iron porphyrin; and metal oxides such as MnO₂, Co₃O₄, NiO, V₂O₅, Fe₂O₃, ZnO, CuO, LiMnO₂, Li₂MnO₃, LiMn₂O₄, Li₄Ti₅O₁₂, Li₂TiO_{3,} LiNi_{1/3}Co_{1/3}Mn_{1/3}O₂, LiNiO₂, LiVO₃, Li₅FeO₄, LiFeO₂, LiCrO₂, LiCoO₂, LiCuO₂, LiZnO₂, Li₂MoO₄, LiNbO₃, LiTaO₃, Li₂WO₄, Li₂ZrO₃, NaMnO₂, CaMnO₃, CaFeO₃, MgTiO₃ and KMnO₂.

The content of the catalyst in the cathode is preferably, for example, in the range of 1% by weight to 90% by weight, with respect to the total amount of constitutional materials of the cathode. If the content of the catalyst is too small, the catalyst may not provide sufficient catalyst performance. If the content of the catalyst is too large, the content of the electroconductive material is relatively smaller and may result in a decrease in the number of reaction sites and may result in a decrease in battery capacity.

The cathode comprising the above-mentioned materials can be produced by the following methods. For example, there may be mentioned a method for subjecting a cathode composite comprising an electroconductive material, a binder and a catalyst to press molding on the surface of a cathode current collector, and a method comprising the steps of: preparing a paste having the cathode composite dissolved in a solvent; and applying the paste on the surface of a cathode current collector followed by drying.

The thickness of the cathode varies depending on the intended use of the lithium-air battery, and is preferably, for example, in the range of 2 µm to 500 µm, more preferably in the range of 5 µm to 300 µm.

The cathode current collector functions to collect current of the cathode. Examples of the material of the air cathode current collector include stainless, nickel, aluminum, iron, titanium and carbon. Examples of the form of the cathode current collector include a foil form, a plate form and a mesh (grid) form. The form of the cathode current collector is preferably a porous form such as a mesh form since a current collector in a porous form is excellent in efficiency of oxygen supply to the cathode. In the case of using a current collector in a mesh form, unlike FIG. 1, the air cathode current collector in the mesh form is provided inside the cathode layer, so that current collection efficiency of the cathode can be increased. In the case of using the current collector in the mesh form, the end of the current collector which functions as a cathode terminal may be in a foil form or a plate form from the viewpoint of current collection efficiency.

The anode comprises at least an anode active material. The anode active material is not particularly limited, and an anode active material of a general air battery can be used. The anode active material can generally intercalate and deintercalate (store and release) lithium ions (metal ions). Examples of the anode active material of the lithium-air battery include: a lithium metal; a lithium alloy such as a lithium-aluminum alloy, a lithium-tin alloy, a lithium-lead alloy and a lithium-silicon alloy; a metal oxide such as a tin oxide, a silicon oxide, a lithium titanium oxide, a niobium oxide and a tungsten oxide; a metal sulfide such as a tin sulfide and a titanium sulfide; a metal nitride such as a lithium cobalt nitride, a lithium iron nitride and a lithium manganese nitride; and a carbon material such as graphite. Among them, preferred are a lithium metal and a carbon material, more preferred is a lithium metal from the viewpoint of increase in capacity.

The anode may comprise at least an anode active material, and if necessary, a binder to fix the anode active material may be contained. Explanation of types and used amount of the binder is omitted here since they are the same as ones in the above-mentioned cathode.

The anode current collector functions to collect current of the anode layer. The material of the anode current collector is not particularly limited as long as it has electrical conductivity. Examples of the material include copper, stainless, nickel and carbon. Examples of the form of the anode current collector include a foil form, a plate form and a mesh (grid) form.

A separator is interposed between the cathode and the anode. The separator is not particularly limited as long as it functions to electrically insulate the cathode from the anode, and has a porous structure capable of being impregnated with the non-aqueous liquid electrolyte. Examples of the separator include: a porous membrane of polyethylene, polypropylene or the like; a nonwoven fabric such as resin nonwoven fabric or glass fiber nonwoven fabric; and a polymer material used for a lithium polymer battery.

The electrolyte used for the lithium-air battery of the present invention is a non-aqueous liquid electrolyte comprising two or more kinds of anions, and is a solution in which an electrolyte (lithium salt) is dissolved in a non-aqueous solvent. Explanation of the organic solvent and the ionic liquid being the non-aqueous solvent is omitted here since they are the same as ones mentioned above. An example of the lithium salt includes one containing a lithium ion and the anion which is exemplified above as being contained in the electrolyte salt. Specific examples of the lithium salt include: inorganic lithium salts such as lithium perchlorate (LiClO₄), lithium hexafluorophosphate (LiPF₆), lithium tetrafluoroborate (LiBF₄) and LiAsF₆; and organic lithium salts such as LiCF₃SO₃, LiN (CF₃SO₂)₂, LiN (C₂F₅SO₂)₂, LiC (CF₃SO₂)₃ and LiN (CF₃SO₂) (C₄F₉SO₂).

The form of the battery case is not particularly limited as long as it can house the above-mentioned cathode, anode and non-aqueous liquid electrolyte. Specific examples of the form of the battery case include a coin form, a plate form, a cylinder form, a laminate form, etc.

### Examples

### (Example 1)

### <Preparation of non-aqueous liquid electrolyte>

First, tetraethylammonium bis(trifluoromethanesulfonyl)imide (hereinafter referred to as TEATFSA) was dissolved in acetonitrile (hereinafter referred to as AN) to prepare a first non-aqueous liquid electrolyte (TEATFSA concentration: 0.1 M).

Separately, tetraethylammonium trifluoromethanesulfonate (hereinafter referred to as TEATfO) was dissolved in AN to prepare a second non-aqueous liquid electrolyte (TEATfO concentration: 0.1 M).

The first non-aqueous liquid electrolyte and the second non-aqueous liquid electrolyte were mixed at a volume ratio of 95:5 to prepare a non-aqueous liquid electrolyte containing two kinds of anions.

### <Evaluation of non-aqueous liquid electrolyte>

The peak potential of oxygen reduction (potential of O₂⁻ formation) in the prepared non-aqueous liquid electrolyte was measured as mentioned below. In particular, pure oxygen (99.99%; 1 atm) was bubbled for 30 minutes in the non-aqueous liquid electrolyte to make the non-aqueous liquid electrolyte be into an oxygen saturated state. Then, the cyclic voltammogram (CV) measurement was performed with a triode cell having the structure mentioned below under the following scanning condition. The result is shown in Table 1. The potential relative to a Li/Li+ reference electrode, which is converted from that relative to an Ag/Ag+ reference electrode, is shown in Table 1.

Triode cell: working electrode/counter electrode/reference electrode = Rod type glassy carbon electrode (manufactured by: BAS Inc.)/ Ni Ribbon (manufactured by: The Nilaco Corporation)/ Ag/Ag+ reference electrode (manufactured by: BAS Inc.)

Scanning condition: Electrode potential was swept from rest potential to -1.7 V (relative to an Ag/Ag+ reference electrode) at a scanning rate of 100 mV/sec, and then swept to 0.3 V (relative to an Ag/Ag+ reference electrode).

### (Example 2)

A non-aqueous liquid electrolyte containing two kinds of anions was prepared similarly as in Example 1 except that the first non-aqueous liquid electrolyte and the second non-aqueous liquid electrolyte were mixed at a volume ratio of 92:8, and the CV measurement was performed. The result is shown in Table 1.

### (Example 3)

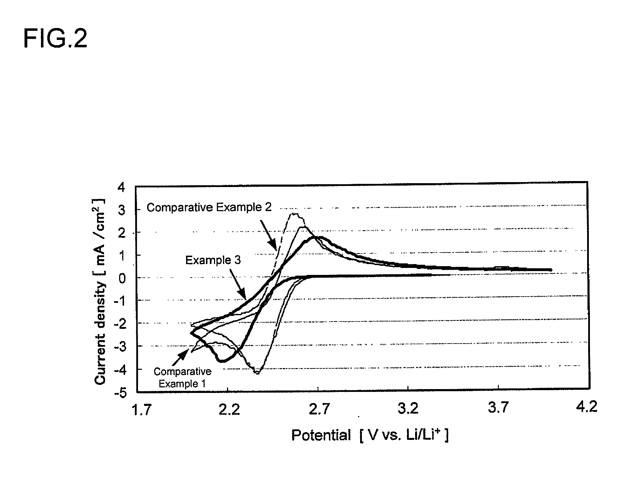

A non-aqueous liquid electrolyte containing two kinds of anions was prepared similarly as in Example 1 except that the first non-aqueous liquid electrolyte and the second non-aqueous liquid electrolyte were mixed at a volume ratio of 90:10, and the CV measurement was performed. The result is shown in Table 1 and FIG. 2. As with Table 1, the potential relative to a Li/Li+ reference electrode, which is converted from that relative to an Ag/Ag+ reference electrode, is shown in FIG. 2.

### (Example 4)

A non-aqueous liquid electrolyte containing two kinds of anions was prepared similarly as in Example 1 except that the first non-aqueous liquid electrolyte and the second non-aqueous liquid electrolyte were mixed at a volume ratio of 88:12, and the CV measurement was performed. The result is shown in Table 1.

### (Example 5)

A non-aqueous liquid electrolyte containing two kinds of anions was prepared similarly as in Example 1 except that the first non-aqueous liquid electrolyte and the second non-aqueous liquid electrolyte were mixed at a volume ratio of 85:15, and the CV measurement was performed. The result is shown in Table 1.

### (Example 6)

A non-aqueous liquid electrolyte containing two kinds of anions was prepared similarly as in Example 1 except that the first non-aqueous liquid electrolyte and the second non-aqueous liquid electrolyte were mixed at a volume ratio of 75:25, and the CV measurement was performed. The result is shown in Table 1.

### (Example 7)

A non-aqueous liquid electrolyte containing two kinds of anions was prepared similarly as in Example 1 except that the first non-aqueous liquid electrolyte and the second non-aqueous liquid electrolyte were mixed at a volume ratio of 65:35, and the CV measurement was performed. The result is shown in Table 1.

### (Example 8)

A non-aqueous liquid electrolyte containing two kinds of anions was prepared similarly as in Example 1 except that the first non-aqueous liquid electrolyte and the second non-aqueous liquid electrolyte were mixed at a volume ratio of 50:50, and the CV measurement was performed. The result is shown in Table 1.

### (Example 9)

A non-aqueous liquid electrolyte containing two kinds of anions was prepared similarly as in Example 1 except that the first non-aqueous liquid electrolyte and the second non-aqueous liquid electrolyte were mixed at a volume ratio of 25:75, and the CV measurement was performed. The result is shown in Table 1.

### (Example 10)

A non-aqueous liquid electrolyte containing two kinds of anions was prepared similarly as in Example 1 except that the first non-aqueous liquid electrolyte and the second non-aqueous liquid electrolyte were mixed at a volume ratio of 10:90, and the CV measurement was performed. The result is shown in Table 1.

### (Example 11)

A non-aqueous liquid electrolyte containing two kinds of anions was prepared similarly as in Example 3 except that tetraethylammonium hexafluorophosphate (hereinafter referred to as TEAPF6) was dissolved in AN to prepare the second non-aqueous liquid electrolyte (TEAPF6 concentration: 0.1 M), and the CV measurement was performed. The result is shown in Table 1.

### (Example 12)

A non-aqueous liquid electrolyte containing two kinds of anions was prepared similarly as in Example 3 except that tetraethylammonium tetrafluoroborate (hereinafter referred to as TEABF4) was dissolved in AN to prepare the second non-aqueous liquid electrolyte (TEABF4 concentration: 0.1 M), and the CV measurement was performed. The result is shown in Table 1.

### (Comparative Example 1)

The CV measurement was performed similarly as in Example 1 using only the first non-aqueous liquid electrolyte in Example 1 as a liquid electrolyte. The result is shown in Table 1 and FIG. 2.

### (Comparative Example 2)

The CV measurement was performed similarly as in Example 1 using only the second non-aqueous liquid electrolyte in Example 1 as a liquid electrolyte. The result is shown in Table 1 and FIG. 2.

### (Comparative Example 3)

The CV measurement was performed similarly as in Example 1 using only the second non-aqueous liquid electrolyte in Example 11 as a liquid electrolyte. The result is shown in Table 1.

### (Comparative Example 4)

The CV measurement was performed similarly as in Example 1 using only the second non-aqueous liquid electrolyte in Example 12 as a liquid electrolyte. The result is shown in Table 1.

### (Evaluation results)

**[Table 1]**

| | Non-aqueous liquid electrolyte | | | Peak potential of reduction (V/ vs. Li/Li+) |
|---|---|---|---|---|
| | Solvent | Electrolyte salt | | |
| Example 1 | AN | TEATFSA (95 mol%) | TEATfO (5 mol%) | 2.31 |
| Example 2 | AN | TEATFSA (92 mol%) | TEATfO (8 mol%) | 2.20 |
| Example 3 | AN | TEATFSA (90 mol%) | TEATfO (10 mol%) | 2.16 |
| Example 4 | AN | TEATFSA (88 mol%) | TEATfO (12 mol%) | 2.24 |
| Example 5 | AN | TEATFSA (85 mol%) | TEATfO (15 mol%) | 2.28 |
| Example 6 | AN | TEATFSA (75 mol%) | TEAPF6 (25 mol%) | 2.24 |
| Example 7 | AN | TEATFSA (65 mol%) | TEATfO (35 mol%) | 2.20 |
| Example 8 | AN | TEATFSA (50 mol%) | TEATfO (50 mol%) | 2.33 |
| Example 9 | AN | TEATFSA (25 mol%) | TEATfO (75 mol%) | 2.33 |
| Example 10 | AN | TEATFSA (10 mol%) | TEATfO (90 mol%) | 2.33 |
| Example 11 | AN | TEATFSA (90 mol%) | TEAPF6 (10 mol%) | 2.24 |
| Example 12 | AN | TEATFSA (90 mol%) | TEABF4 (10 mol%) | 2.27 |
| Comparative Example 1 | AN | TEATFSA (100 mol%) | | 2.35 |
| Comparative Example 2 | AN | TEATfO (100 mol%) | | 2.37 |
| Comparative Example 3 | AN | TEAPF6 (100 mol%) | | 2.29 |
| Comparative Example 4 | AN | TEABF4 (100 mol%) | | 2.34 |

As shown in Table 1 and FIG. 2, the non-aqueous liquid electrolyte containing two or more kinds of anions in each of Examples 1 to 10 had lower peak potential of oxygen reduction compared with the non-aqueous liquid electrolyte containing only one kind of anion in each of Comparative Examples 1 and 2. Particularly in Examples 1 to 7 in which the ratio (mol ratio) of anion having a relatively large molecular weight (bis(trifluoromethanesulfonyl)imide) and anion having a relatively small molecular weight (trimethanesulfonate) is in the range of 95:5 to 65:35, more particularly in Examples 2 to 4 in which the ratio is in the range of 92:8 to 88:12, still more particularly in Example 3 in which the ratio is 90:10, the peak potential of oxygen reduction was significantly lowered.

As with the comparison between Example 11 and Comparative Example 3, the non-aqueous liquid electrolyte containing two kinds of anions in Example 11 had lower peak potential of oxygen reduction compared with the non-aqueous liquid electrolyte containing only one kind of anion in Comparative Example 3.

As with the comparison between Example 12 and Comparative Example 4, the non-aqueous liquid electrolyte containing two kinds of anions in Example 12 had lower peak potential of oxygen reduction compared with the non-aqueous liquid electrolyte containing only one kind of anion in Comparative Example 4.

### Reference Signs List

1: Secondary battery
2: Cathode
3: Anode
4: Non-aqueous liquid electrolyte
5: Separator
6: Cathode current collector
7: Anode current collector
8: Battery case
9: Cathode terminal
10: Anode terminal

## Claims

1. A non-aqueous liquid electrolyte secondary battery comprising a cathode, an anode and a non-aqueous liquid electrolyte present between the cathode and the anode,
wherein the non-aqueous liquid electrolyte secondary battery has a closed structure in which the cathode, the anode and the non-aqueous liquid electrolyte are insulated from at least carbon dioxide and water;
wherein the cathode uses oxygen as an active material;
wherein the non-aqueous liquid electrolyte secondary battery has a discharge voltage of 3V or less relative to a Li/Li+ reference electrode; and
wherein the non-aqueous liquid electrolyte comprises bistrifluoromethanesulfonylimide as a first anion having a relatively large molecular weight, and at least one kind selected from the group consisting of trifluoromethanesulfonate, hexafluorophosphate and tetrafluoroborate as a second anion having a relatively small molecular weight.

2. The non-aqueous liquid electrolyte secondary battery according to claim 1, being a non-aqueous liquid electrolyte lithium secondary battery.

3. The non-aqueous liquid electrolyte secondary battery according to any one of claims 1 to 2, wherein a molar ratio of the first anion and the second anion (first anion: second anion) is 95:5 to 65:35.

4. The non-aqueous liquid electrolyte secondary battery according to any one of claims 1 to 3, wherein the non-aqueous liquid electrolyte is a solution in which an electrolyte salt is dissolved in at least one kind of non-aqueous solvent selected from the group consisting of acetonitrile, dimethyl sulfoxide, dimethoxyethane, N-methyl-N-propylpiperidinium bis(trifluoromethanesulfonyl)imide and N-methyl-N-propylpyrrolidinium bis(trifluoromethanesulfonyl)imide.

5. The non-aqueous liquid electrolyte secondary battery according to any one of claims 1 to 4, having a closed structure in which the cathode, the anode and the non-aqueous liquid electrolyte are insulated from the atmosphere.

## Patentansprüche

1. Nicht-wässrige Flüssigelektrolytsekundärbatterie, die eine Kathode, eine Anode und einen nicht-wässrigen Flüssigelektrolyt, der zwischen der Kathode und der Anode vorhanden ist, umfasst,
wobei die nicht-wässrige Flüssigelektrolytsekundärbatterie eine geschlossene Struktur aufweist, in welcher die Kathode, die Anode und der nicht-wässrige Flüssigelektrolyt gegenüber zumindest Kohlenstoffdioxid und Wasser isoliert sind;
wobei die Kathode Sauerstoff als ein Aktivmaterial verwendet;
wobei die nicht-wässrige Flüssigelektrolytsekundärbatterie eine Entladungsspannung von 3 V oder weniger relativ zu einer Li/Li+ Referenzelektrode aufweist; und
wobei der nicht-wässrige Flüssigelektrolyt Bistrifluormethan-sulfonylimid als ein erstes Anion mit einem relativ großen Molekulargewicht und zumindest eine Art ausgewählt aus der Gruppe bestehend aus Trifluormethansulfonat, Hexafluorphosphat und Tetrafluorborat als ein zweites Anion mit einem relativ geringen Molekulargewicht aufweist.

2. Nicht-wässrige Flüssigelektrolytsekundärbatterie nach Anspruch 1, die eine nicht-wässrige Flüssigelektrolytlithiumsekundärbatterie ist.

3. Nicht-wässrige Flüssigelektrolytsekundärbatterie nach einem der Ansprüche 1 bis 2, wobei ein Molverhältnis des ersten Anions zu dem zweiten Anion (erstes Anion: zweites Anion) 95:5 bis 65:35 ist.

4. Nicht-wässrige Flüssigelektrolytsekundärbatterie nach einem der Ansprüche 1 bis 3, wobei der nicht-wässrige Flüssigelektrolyt eine Lösung ist, in welcher ein Elektrolytsalz in zumindest einer Art von nicht-wässrigem Lösungsmittel gelöst ist, das aus der Gruppe ausgewählt ist, die aus Acetonitril, Dimethylsulfoxid, Dimethoxyethan, N-Methyl-N-propylpiperidinium bis(trifluormethansulfonyl)imid und N-Methyl-N-propylpyrrolidinium bis(trifluormethansulfonyl)imid besteht.

5. Nicht-wässrige Flüssigelektrolytsekundärbatterie nach einem der Ansprüche 1 bis 4, die eine geschlossene Struktur aufweist, in welcher die Kathode, die Anode und der nicht-wässrige Flüssigelektrolyt von der Atmosphäre isoliert sind.

## Revendications

1. Accumulateur secondaire à électrolyte liquide non aqueux comprenant une cathode, une anode et un électrolyte liquide non aqueux présent entre la cathode et l'anode,
dans lequel l'accumulateur secondaire à électrolyte liquide non aqueux présente une structure fermée dans laquelle la cathode, l'anode et l'électrolyte liquide non aqueux sont isolés d'au moins le dioxyde de carbone et l'eau ;
dans lequel la cathode utilise de l'oxygène comme une matière active ;
dans lequel l'accumulateur secondaire à électrolyte liquide non aqueux présente une tension de décharge de 3V ou inférieure par rapport à une électrode de référence Li/Li+ ; et
dans lequel l'électrolyte liquide non aqueux comprend du bistrifluorométhanesulfonylimide comme un premier anion présentant une masse moléculaire relativement importante, et au moins un type choisi dans le groupe constitué de sulfonate de trifluorométhane, d'hexafluorophosphate et de tétrafluoroborate comme un second anion ayant une masse moléculaire relativement faible.

2. Accumulateur secondaire à électrolyte liquide non aqueux selon la revendication 1, étant un accumulateur secondaire au lithium à électrolyte liquide non aqueux.

3. Accumulateur secondaire à électrolyte liquide non aqueux selon l'une quelconque des revendications 1 à 2, dans lequel un rapport molaire du premier anion et du second anion (premier anion : second anion) est de 95:5 à 65:35.

4. Accumulateur secondaire à électrolyte liquide non aqueux selon l'une quelconque des revendications 1 à 3, dans lequel l'électrolyte liquide non aqueux est une solution dans laquelle un sel d'électrolyte est dissous dans au moins un type de solvant non aqueux choisi dans le groupe constitué d'acétronitrile, de diméthylsulfoxyde, de diméthoxyéthane, de bis(trifluorométhanesulfonyl)imide de N-méthyl-N-propylpipéridinium et de bis(trifluorométhanesulfonyl)imide de N-méthyl-N-propylpyrrolidinium.

5. Accumulateur secondaire à électrolyte liquide non aqueux selon l'une quelconque des revendications 1 à 4, présentant une structure fermée dans laquelle la cathode, l'anode et l'électrolyte liquide non aqueux sont isolés de l'atmosphère.
